(19) Europäisches Patentamt

European Patent Office

Office européen des brevets

(11) EP 0 756 886 A2

## (12) EUROPÄISCHE PATENTANMELDUNG

(43) Veröffentlichungstag:
    05.02.1997 Patentblatt 1997/06

(51) Int. Cl.$^6$: B01D 53/047

(21) Anmeldenummer: 96111666.2

(22) Anmeldetag: 19.07.1996

(84) Benannte Vertragsstaaten:
    AT BE DE ES FI FR GB IT NL SE

(30) Priorität: 01.08.1995 DE 19528188

(71) Anmelder: BAYER AG
    51368 Leverkusen (DE)

(72) Erfinder:
    • Reiss, Gerhard
      51375 Leverkusen (DE)
    • Puppe, Lothar, Dr.
      51399 Burscheid (DE)
    • Hees, Bruno
      40764 Langenfeld (DE)

(54) **Verfahren zur Adsorption von Stickstoff aus Gasgemischen mittels Druckwechseladsorption mit Zeolithen**

(57) Die vorliegende Erfindung betrifft ein verbessertes Druckwechseladsorptionsverfahren zur Adsorption von Stickstoff aus Gasgemischen mit Zeolithgranulaten.

**Beschreibung**

Die vorliegende Erfindung betrifft ein verbessertes Druckwechseladsorptionsverfahren zur Adsorption von Stickstoff aus Gasgemischen mit Zeolithgranulaten.

Die Erzeugung von Sauerstoff aus Luft bei Umgebungstemperatur wird industriell in großem Umfang mit Molekularsieb-Zeolithen durchgeführt (vergl. z.B. Gas Review Nippon, Seite 13, Nr. 5, 1985). Hierbei wird die bevorzugte Adsorption von Stickstoff gegenüber Sauerstoff ausgenutzt, d.h. Sauerstoff und Argon werden beim Durchströmen der Luft durch eine Zeolithschüttung am Austritt der Schüttung als Produkt aufgefangen. Die Desorption des adsorbierten Stickstoffs kann dann z.B. durch Evakuieren der Schüttung erfolgen. Für diesen Fall bezeichnet man den Prozeß als Vakuum-Swing-Adsorption (VSA), im Gegensatz zur ebenfalls bekannten Pressure-Swing-Adsorption (PSA). Ein kontinuierlicher VSA-Prozeß ist durch folgende Verfahrensschritte gekennzeichnet:

a) Durchleiten von Luft durch die Zeolithschüttung (bei Umgebungsdruck von beispielsweise 1 bar) und Abnahme von $O_2$-reichem Gas an der Austrittsseite;

b) Evakuieren der Schüttung mit einer Vakuumpumpe auf einen Unterdruck (beispielsweise von etwa 100 bis 400 mbar im Gegenstrom der Luftströmung);

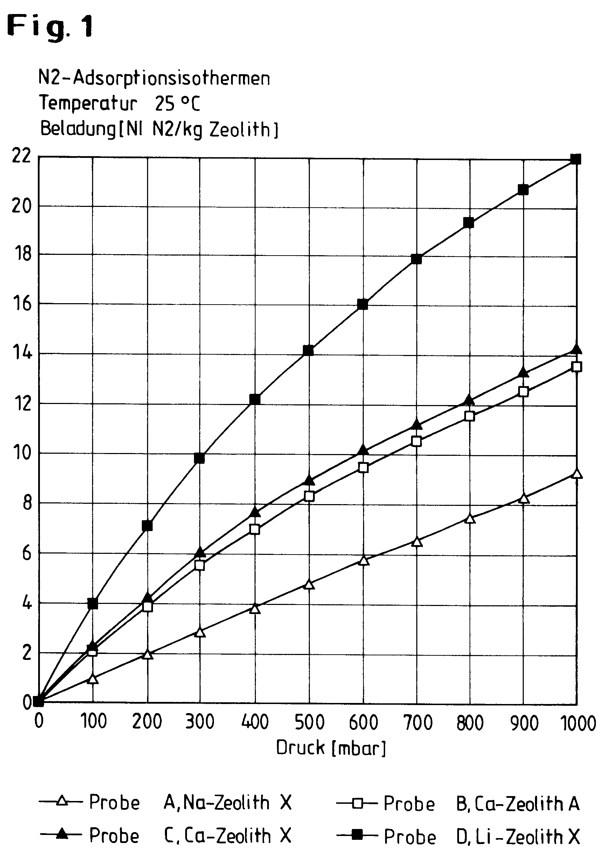

c) Befüllen der Schüttung mit $O_2$-reichem Gas (beispielsweise auf Umgebungsdruck von beispielsweise 1 bar im Gegenstrom zur Luftströmung (siehe z.B. Fig. 1)).

Im PSA-Prozeß wird der Schritt b) bei etwa Umgebungsdruck von beispielsweise 1 bar unter Spülung mit einem Teil des $O_2$-reichen Gases durchgeführt. Im sogenannten PVSA-Prozeß (Kombination aus VSA und PSA) wird die Trennung bei 1,1 bis 2 bar und die Desorption bei ca. 200 bis 700 mbar (Minimaldruck) durchgeführt. Ziel dieser Prozesse ist eine hohe Produktrate - bezogen auf eingesetzte Zeolithmenge - zu erhalten und eine hohe $O_2$-Ausbeute (Verhältnis von $O_2$-Menge im Produkt zu $O_2$-Menge der eingeströmten Luft) zu erreichen. Eine hohe $O_2$-Ausbeute schließt einen niedrigen Energiebedarf der Vakuumpumpe bzw. des Luftkompressors ein.

Bedingt durch die drei obengenannten Schritte hat man meist drei Zeolithschüttungen, d.h. drei Adsorber, die zyklisch betrieben werden. Die Adsorption kann im Falle des VSA-Verfahrens auch mit 2 Adsorbern betrieben werden (GB-A 1 559 325).

Die Wirtschaftlichkeit derartiger Adsorptionsanlagen wird durch die Investition, wie z.B. Adsorptionsmittelmenge, Vakuumpumpengröße, und insbesondere durch die Betriebskosten, wie Stromverbrauch der Vakuumpumpen, beeinflußt. Es wurden daher Zeolithe entwickelt, mit denen es möglich ist, hohe Stickstoffadsorptionen zu erreichen, so daß die eingesetzte Zeolithmenge klein gehalten bzw. sogar reduziert werden konnte. Hierzu werden , wie in EP-A 128 545 beschrieben, Ca-Zeolithe-A eingesetzt.

Weitere Entwicklungen auf diesem Gebiet zielen auf die Erhöhung der Selektivität des Stickstoffs gegenüber Sauerstoff ab.

Eine höhere Selektivität erreicht man durch den Einsatz von Lithium-Zeolith X, (EP-A 297 542). Man erhält einen höheren Separationsfaktor sowie eine höhere $N_2$-Beladung gegenüber Na-Zeolith X.

Mit Li-Zeolith X wird gegenüber Na-Zeolith X auch ein besserer Energiewert erreicht (EP-A 461 478, Beispiel 2).

Zur weiteren Optimierung des Adsorptionsprozesses im Bereich der Lufttrennung hat man Adsorptionsmittelschüttungen vorgeschlagen, die aus Zonen mit unterschiedlichen Zeolithtypen bestehen.

Aus JP 87/148 304 ist ein Sauerstoffanreicherungsprozeß bekannt, bei dem anstelle eines Adsorbers mit einer Zeolithschüttung ein Adsorber mit speziellen Anordnungen verschiedener Zeolithtypen eingesetzt wird. Der Adsorber enthält an der Lufteintrittsseite Zeolithe von Na-X-, Na-Y- oder Ca-X-Typ und an der Luftaustrittsseite Zeolithe vom Ca-A-Typ.

In EP-A 374 631 wird in der Lufteintrittszone ein Ca-Zeolith-A mit niedriger $N_2$-Adsorption und an der Austrittszone ein Ca-Zeolith-A mit hoher $N_2$-Adsorption eingesetzt, wobei das $CaO/Al_2O_3$-Verhältnis beider Zeolithe etwa gleich groß ist. Die verschiedenen Beladungskapazitäten rühren von unterschiedlichen Aktivierungen her.

In EP-A 0 546 542 wird eine Schüttanordnung beschrieben, bei der in der Lufteintrittszone Li-Zeolith X und in der Luftaustrittszone Na-Zeolith X verwendet wird.

Aufgabe war es, ein energiegünstigeres Druckwechseladsorptionsverfahren zur Adsorption von Stickstoff aus Gasgemischen mit weniger polaren Gaskomponenten zur Verfügung zu stellen, mit dem gegenüber dem Stand der Technik auch verbesserte $O_2$-Ausbeuten erreicht werden.

Diese Aufgabe konnte überraschenderweise mit Kombinationen spezieller Zeolithtypen in den Druckwechseladsorptionsverfahren gelöst werden.

Gegenstand der Erfindung ist ein Verfahren zur Adsorption von Stickstoff aus Gasgemischen mit weniger polaren Gaskomponenten, insbesondere aus Luft, bei Temperaturen zwischen 20 und 50°C mittels Druckwechseladsorption, bei dem das Gasgemisch durch einen Adsorber geleitet wird, der mit Schüttungen aus Zeolithgranulat gefüllt ist, welches dadurch gekennzeichnet ist, daß im Adsorber mindestens zwei Schüttungen vorliegen, wobei in der Eintrittszone des Adsorbers eine Schüttung aus Li-Zeolith X und in der Austrittszone des Adsorbers eine Schüttung aus Zeolith A, der mit Kationen der Erdalkalimetallgruppe bestehend aus Magnesium, Calcium und Strontium ausgetauscht ist, und/oder aus Zeolith X, der mit Kationen der Erdalkalimetallgruppe bestehend aus Magnesium, Calcium und Strontium ausgetauscht ist, vorliegen.

Bei Druckwechseladsorptionsverfahren unterscheidet man insbesondere zwischen VSA-Verfahren (bei dieser Verfahrensvariante wird bevorzugt bei Evakuierungsdrücken zwischen 100 und 400 mbar und Adsorptionsdrücken zwischen 1 bar und 1,1 bar gearbeitet), PSA-Verfahren (hier wird bevorzugt bei einem Desorptionsdruck von 1 bis 1,1 bar und einem Adsorptionsdruck von 2 bis 6 bar gearbeitet) und PVSA (hier wird bei einem Evakuierungsdruck zwischen 200 und 700 mbar und einem Adsorptionsdruck zwischen 1,1 und 2 bar gearbeitet).

Mit der erfindungsgemäßen Kombination an speziellen Zeolithtypen konnte nicht nur die $O_2$-Ausbeute erhöht werden sondern auch der Energieverbrauch überraschenderweise reduziert werden.

Der Zeolith X hat vorzugsweise ein molares $SiO_2/Al_2O_3$-Verhältnis von 2,0 bis 3,0 und ein molares Erdalkalimetalloxid/$Al_2O_3$-Verhältnis von 0,45 bis 1,0.

Bevorzugt liegen im Adsorber mindestens zwei Schüttungen vor, wobei in der Eintrittzone des Adsorbers eine Schüttung aus Li-Zeolith X und in der Austrittszone eine Schüttung aus Ca-Zeolith A und/oder Ca-Zeolith X vorliegen.

Bei einer Schüttung aus Ca-Zeolith A- und Ca-Zeolith X-Granulat in der Austrittszone des Adsorbers können die beiden Zeolithtypen entweder als zwei separate Schüttungen vorliegen oder als eine Schüttung aus einem Gemisch der beiden Zeolithtypen.

Bevorzugt liegen zwei Schüttungen im Adsorber vor.

Beim eingesetzten Li-Zeolith X handelt es sich vorzugsweise um einen Zeolithen, der ein molares $SiO_2/Al_2O_3$-Verhältnis von 2,0 bis 2,5 aufweist und dessen $AlO_2$-Tetraedereinheiten zu 80 bis 100 % mit Lithiumkationen assoziiert sind. Die Restkationen sind vorzugsweise Natrium-, Magnesium-, Kalzium- oder Strontiumionen oder Protonen oder Gemische davon.

Bevorzugt weist der eingesetzte Ca-Zeolith X ein molares $SiO_2/Al_2O_3$-Verhältnis von 2,0 bis 3,0 und ein molares $CaO/Al_2O_3$-Verhältnis von 0,45 bis 1,0 auf.

Der eingesetzte Ca-Zeolith A weist einen Austauschgrad für Ca-Ionen von 0,45 bis 1,0 auf.

Andere bevorzugte Kombinationen von Schüttungen sind folgende:

Eine Schüttung aus Li-Zeolith X und in der Austrittszone des Adsorbers eine Schüttung aus Sr-Zeolith A und/oder Sr-Zeolith X,

eine Schüttung aus Li-Zeolith X und in der Austrittszone des Adsorbers eine Schüttung aus Mg-Zeolith A und/oder Mg-Zeolith X,

eine Schüttung aus Li-Zeolith X und in der Austrittszone des Adsorbers eine Schüttung aus Ca-Zeolith A und/oder Ca-Zeolith X,

eine Schüttung aus Li-Zeolith X und in der Austrittszone des Adsorbers eine Schüttung aus einem Zeolith A, der mit Calcium- und Magnesiumionen ausgetauscht ist und der ein molares $CaO/Al_2O_3$-Verhältnis von 0,05 bis 0,95 und molares $MgO/Al_2O_3$-Verhältnis von 0,05 bis 0,95 aufweist, und/oder aus einem Zeolith X, der mit Calcium- und Magnesiumionen ausgetauscht ist und der ein molares $CaO/Al_2O_3$-Verhältnis von 0,05 bis 0,95 und ein molares $MgO/Al_2O_3$-Verhältnis von 0,05 bis 0,95 aufweist,

eine Schüttung aus Li-Zeolith X und in der Austrittszone des Adsorbers eine Schüttung aus einem Zeolith A, der mit Calcium-, und Strontiumionen ausgetauscht ist und der ein molares $CaO/Al_2O_3$-Verhältnis von 0,05 bis 0,95 und ein molares $SrO/Al_2O_3$-Verhältnis von 0,05 bis 0,95 aufweist, und/oder aus einem Zeolith X, der mit Calcium- und Strontiumionen ausgetauscht ist und der ein molares $CaO/Al_2O_3$-Verhältnis von 0,05 bis 0,95 und ein molares $SrO/Al_2O_3$-Verhältnis von 0,05 bis 0,95 aufweist, vorliegen,

eine Schüttung aus Li-Zeolith X und in der Austrittszone des Adsorbers eine Schüttung aus einem Zeolith A, der mit Strontium- und Magnesiumionen ausgetauscht ist und der ein molares $SrO/Al_2O_3$-Verhältnis von 0,05 bis 0,95 und ein molares $MgO/Al_2O_3$-Verhältnis von 0,5 bis 0,95 aufweist, und/oder aus einem Zeolith X, der mit Calcium- und Strontiumionen ausgetauscht ist und der ein molares $SrO/Al_2O_3$-Verhältnis von 0,05 bis 0,95 und ein molares $MgO/Al_2O_3$-Verhältnis von 0,05 bis 0,95 aufweist, vorliegen.

Der Zeolith X in der Austrittszone des Adsorbers hat bevorzugt ein molares $SiO_2/Al_2O_3$-Verhältnis von 2,0 bis 3,0 und ein molares $MeO/Al_2O_3$-Verhältnis (mit Me = Ca, Sr) von 0,45 bis 1,0 und ein molares $MeO/Al_2O_3$-Verhältnis (mit Me=Mg) von 0,3 bis 1,0.

Der Zeolith A in der Austrittszone des Adsorbers hat bevorzugt ein molares $MeO/Al_2O_3$-Verhältnis (mit Me = Ca, Sr) von 0,45 bis 1,0 und ein molares $MeO/Al_2O_3$-Verhältnis (mit Me = Mg) von 0,3 bis 1,0.

Der Anteil an Li-Zeolith X an der Gesamtmenge der Schüttungen im Adsorber beträgt 20 bis 90 %, vorzugsweise 25 bis 75 %. Der Anteil hängt von der Lufteintrittstemperatur und vom Druckverhältnis zwischen maximalem Adsorptionsdruck und minimalem Desorptionsdruck ab.

Beispielsweise sollte bei einem Adsorptionsdruck von 1 bis 2 bar der minimale Absaugdruck vorzugsweise zwischen 100 und 700 mbar liegen, die Adsorptionszykluszeit pro Adsorber 20 bis 80 Sekunden betragen und die Anzahl der Adsorber zwischen 1 und 3 liegen.

Die technische Durchführung des erfindungsgemäßen Verfahrens wird ausführlich z.B. in "Gas Separation and Purification" 1991, Vol. 5, June, Seiten 89 und 90, beschrieben.

Neben den obengenannten Ca-ausgetauschten Zeolithen A und X können auch mit anderen zweiwertigen Kationen, insbesondere Magnesium, Barium, Strontium oder deren Gemische, ausgetauschte Zeolithe A und X eingesetzt werden. Das Kalzium in den Zeolithen A und X kann teilweise oder vollständig durch die genannten zweiwertigen Kationen ersetzt sein (siehe US 3 313 091).

Bevorzugt kann der Gasstrom. vor Durchleiten durch die Zeolithschüttung getrocknet werden, beispielsweise mittels Durchleiten durch eine Trocknungsschicht aus Kieselgel.

Die Erfindung soll anhand der nachfolgenden Beispiele näher erläutert werden.

## Beispiele

Die eingesetzten Zeolith X-Typen wurden durch Ionenaustausch des entsprechenden Na-Zeolith X-Granulates (Probe A) hergestellt.

**Probe A (Na-Zeolith X)**

Das Na-Zeolith X-Granulat wurde gemäß dem deutschen Patent 2 016 838, Beispiel 2, hergestellt, wobei das Granulat etwa 18 % Zeolith A und 82 % Zeolith X enthielt. Das molare $SiO_2/Al_2O_3$-Verhältnis betrug 2,3, die Korngröße 1 bis 2 mm und das Schüttgewicht ca. 650 g/l. Die Aktivierung erfolgte bei 600°C mit trockenem Stickstoff.

**Probe B (Ca-Zeolith A)**

Ein Ca-Zeolith A-Granulat wurde entsprechend EP-A 0 170 026, Beispiel 2, hergestellt. Die Kalzinierung erfolgte im Stickstoffstrom bei 500 bis 600°C. Das molare $CaO/Al_2O_3$-Verhältnis betrug 0,72.

**Probe C (Ca-Zeolith X)**

Obengenanntes Na-Zeolith X-Granulat wurde vor seiner Aktivierung einem Ca-Austausch unterzogen, wobei die Behandlung gemäß EP-A 0 170 026, Beispiel 15, durchgeführt wurde. Die Aktivierung erfolgte danach unter $N_2$ bei 600°C. Das molare $CaO/Al_2O_3$-Verhältnis betrug 0,75.

**Probe D (Li-Zeolith X)**

Ein Na-Zeolith X wurde vor seiner Aktivierung einem Lithium-Austausch unterzogen (gemäß EP-A 297 542). 12 l eines binderfreien Na-Zeolith X-Granulates, hergestellt nach DE-A 1 203 238, wurden in eine Säule mit beheizbarem Mantel eingefüllt. Anschließend wurden 690 l einmolare Lithiumchlorid-Lösung innerhalb von 15 Stunden durch die Granulatschüttung gepumpt. Die Temperatur betrug 85°C. Nach Beendigung des Ionenaustausches wurde das Granulat mit Wasser, das mit LiOH auf einen pH-Wert von 9 eingestellt wurde, gewaschen. Danach erfolgte die Aktivierung unter Stickstoff bei 600°C. Das molare $Li_2O/Al_2O_3$-Verhältnis betrug 0,96.

Die Adsorptionsleistungen der Proben für Stickstoff sind der Tabelle 1 sowie der Figur 1 zu entnehmen.

Tabelle 1

| Adsorptionseigenschaften der Proben: | | | | |
|---|---|---|---|---|
| Probe | A | B | C | D |
| $N_2$-Adsorption bei 1 bar und 25°C in [Nl/kg] | 9,25 | 13,5 | 14,25 | 22 |
| $N_2/O_2$-Adsorptionsverhältnis bei 1 bar und 25°C | 2,65 | 2,95 | 3,15 | 4,55 |

Versuchsdurchführung

Bei der Versuchsanlage und der Durchführung der Versuche wurden folgende Parameter konstant gehalten:

| Schüttdurchmesser | 500 mm |
|---|---|
| Schütthöhe der $Al_2O_3$-Schicht am Lufteintritt | 10 % der MS-Höhe |
| Lufteintrittstemperatur | 40°C |
| Luftaustrittstemperatur | 40°C |
| Druck der Luft am Eintritt | 1.150 mbar (max.) |
| Höhe der Zeolithschicht | 1.600 mm |
| minimaler Abpumpdruck, Eintritt | 250 mbar |
| Druck am Anfang des Abpumpens | 900 mbar |
| Abpumpzeit/Adsorptionszeit | 30 Sekunden |
| Umfüllschritt (BFP-Zeit) | 6 Sekunden |

Die Adsorber waren mit einer Isolierung versehen, um einen Wärmetransport mit der Umgehung auszuschließen. Die Wandstärke der Behälter betrug ca. 1 mm.

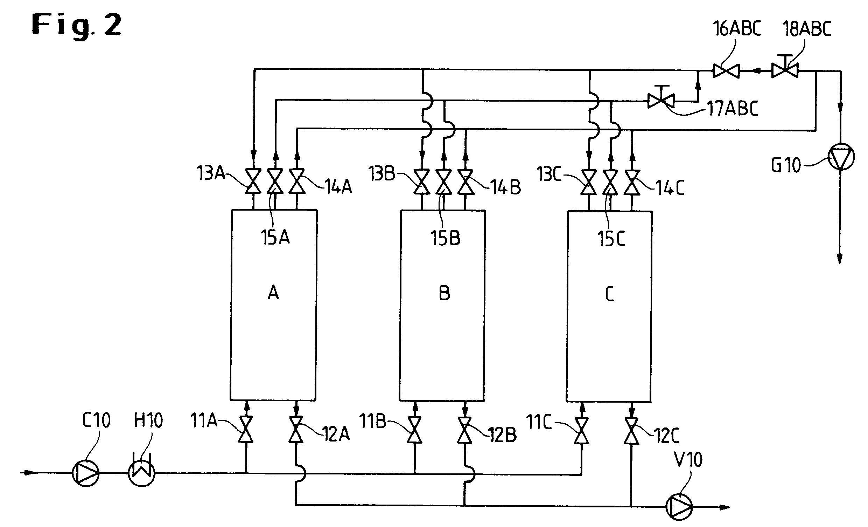

Versuchsablauf für einen Adsorberzyklus gemäß Fig. 2:

C 10 -      Luftgebläse
H 10 -      Kühler / Heizung
G 10 -      Produktgebläse
V 10 -      Vakuumpumpe
A, B, C -    Adsorber

**Zeit 0 sec.:**

Adsorber A hat die Adsorption beendet.

**Zeit 0 - 6 sec. = BFP-Zeit:**

Am Adsorber A ist nur das Ventil 15 A geöffnet. Am Adsorber C sind nur die Ventile 12C und 13C geöffnet. Dadurch strömt $O_2$-reiches Gas von Adsorber A über Ventil 15 A sowie über Regelventil 17 ABC und Ventil 13 C in Adsorber C. Adsorber C beendet hierbei seinen Evakuierungsschritt, wobei der Druck von minimalem Niveau (z.B. 250 mbar) auf einen höheren Druck ansteigt. In Adsorber A fällt der Druck von seinem maximalen Niveau (z.B. 1 150mbar) auf den Anfangssaugdruck (z.B. 900 mbar).

Adsorber B startet die Lufttrennung, d.h. Luft tritt durch Ventil 11 B in den Adsorber B, und $O_2$-reiches Produktgas verläßt Ventil 14 B und wird an Kompressor G 10 abgeführt.

**Zeit 6 - 30 sec.:**

Am Adsorber A ist nur Ventil 12 A offen; Adsorber A wird von beispielsweise 900 mbar über die Vakuumpumpe V 10 auf z.B. 250 mbar abgepumpt. Adsorber B ist auf Adsorption wie unter "Zeit 0 - 6 sec.", gleichzeitig wird über Ventil 13 C $O_2$-reiches Gas über Ventil 18 ABC und 13 C in Adsorber C gefüllt. Am Adsorber C ist nur Ventil 13 C geöffnet. Die Füllmenge ist so bemessen, daß am Ende dieses Zeitraumes der Druck im Adsorber C beispielsweise 1 080 bis 1 090 mbar beträgt.

Im nächsten Zyklus trennt Adsorber C die Luft, danach Adsorber A, d.h. die beiden Zeiten "0 - 6 sec." und "6 - 30 sec." werden wiederholt.

Während der Versuchsdurchführungen wurden folgende Parameter zusätzlich gemessen:
die $O_2$-reiche Produktmenge,
der Druckverlauf am Adsorbereintritt während der Abpumpzeit,
die abgepumpte Gasmenge.

Aus abgepumpter Gasmenge und $O_2$-Produktmenge ergibt sich die eingeströmte Luftmenge und daraus die $O_2$-Ausbeute (= $O_2$-Menge im Produkt zu $O_2$-Menge der Luft).

Alle Werte beziehen sich auf eine $O_2$-Konzentration im Produkt von 93 Vol.-%; außerdem wurde der Energiewert aus Vakuumpumpe und Luftgebläse für eine $O_2$-Menge von 1 000 $m^2$/h umgerechnet.

Der Energiebedarf der Vakuumpumpe wurde aus dem Druckverlauf während des Abpumpens vor der Schüttung errechnet, indem die Kennlinie (= Energiebedarf in Abhängigkeit von Absaugdruck) eines bekannten Wälzkolbengebläses mit einer Absaugkapazität von 20 000 $m^3$/h (bei 1,03 bar) herangezogen wurde. Der Energiebedarf des Luftgebläses wurde nach folgender Formel berechnet:

$$\frac{(3.060 \times Pm - 286 \times Vo)}{10.621 \times \mu}$$

Pm      1 045 mbar
Vo =     Luftmenge bei 1,03 bar
$\mu$ =     Wirkungsgrad = 0,95

**Beispiel 1 (Vergleich; Na-Zeolith X)**

Probe A wurde im Adsorber eingesetzt. Die $H_2O$-Restbeladung des aktivierten Zeolithen lag unter 0,5 Gew.-% (nach DIN 8948; $P_2O_5$-Methode). Die Zeolithmenge pro Adsorber betrug 190 kg. Die Sauerstoffanreichetung erfolgte gemäß obigen Ausführungen. Folgende Daten wurden ermittelt:

| | |
|---|---|
| Temperatur der Luft am Eintritt [°C] | 40 |
| Produktmenge [$Nm^3$/h] | 15,9 |
| $O_2$-Ausbeute [%] | 45,5 |
| Errechneter gesamter Energiebedarf [$KWh/Nm^3O_2$] | 0,46 |

**Beispiel 2 (Vergleich; Ca-Zeolith A)**

Probe B wurde im Adsorber eingesetzt (190 kg/Adsorber). Die $H_2O$-Restbeladung des aktivierten Zeolithen lag unter 0,5 Gew.-%. Folgende Daten wurden ermittelt:

| | |
|---|---|
| Temperatur der Luft am Eintritt [°C] | 40 |
| Produktmenge [$Nm^3$/h] | 21,4 |
| $O_2$-Ausbeute [%] | 52,5 |
| Errechneter gesamter Energiebedarf [$KWh/Nm^3O_2$] | 0,395 |

**Beispiel 3 (Vergleich; Ca-Zeolith X)**

Probe C wurde im Adsorber eingesetzt (190 kg/Adsorber). Die $H_2O$-Restbeladung des aktivierten Zeolithen lag unter 0,5 Gew.-%. Folgende Daten wurden ermittelt:

| | |
|---|---|
| Temperatur der Luft am Eintritt [°C] | 40 |
| Produktmenge [$Nm^3$/h] | 22 |
| $O_2$-Ausbeute [%] | 52,5 |
| Errechneter gesamter Energiebedarf [$KWh/Nm^3O_2$] | 0,40 |

**Beispiel 4 (Vergleich; Li-Zeolith X)**

Probe D wurde im Adsorber eingesetzt (190 kg/Adsorber). Die $H_2O$-Restbeladung des aktivierten Zeolithen lag unter 0,5 Gew.-%. Folgende Daten wurden ermittelt:

| Temperatur der Luft am Eintritt [°C] | 40 |
|---|---|
| Produktmenge [$Nm^3$/h] | 23 |
| $O_2$-Ausbeute [%] | 54 |
| Errechneter gesamter Energiebedarf [$KWh/Nm^3O_2$] | 0,375 |

**Beispiel 5 (Vergleich; Li-Zeolith X in der Eintrittszone und Na-Zeolith X in der Austrittszone)**

Über die Zone mit dem Trockenmittel wurden 95 kg Probe D und darüber 95 kg Probe A in den Adsorber gefüllt. Folgende Daten wurden ermittelt:

| Temperatur der Luft am Eintritt [°C] | 40 |
|---|---|
| Produktmenge [$Nm^3$/h] | 18 |
| $O_2$-Ausbeute [%] | 44,5 |
| Errechneter gesamter Energiebedarf [$KWh/Nm^3O_2$] | 0,46 |

**Beispiel 6 (Vergleich; Ca-Zeolith A in der Eintrittszone und Li-Zeolith X in der Austrittszone)**

Über die Zone mit dem Trockenmittel wurden 95 kg Probe B und darüber 95 kg Probe D in den Adsorber gefüllt. Folgende Daten wurden ermittelt:

| Temperatur der Luft am Eintritt [°C] | 40 |
|---|---|
| Produktmenge [$Nm^3$/h] | 22 |
| $O_2$-Ausbeute [%] | 51 |
| Errechneter gesamter Energiebedarf [$KWh/Nm^3O_2$] | 0,398 |

**Beispiel 7 (erfindungsgemäß; Li-Zeolith X in der Eintrittszone und Ca-Zeolith X in der Austrittszone)**

Über die Trockenmittelzone wurden in den Adsorber 95 kg Probe D und darüber 95 kg der Probe C eingefüllt.

| Temperatur der Luft am Eintritt [°C] | 40 |
|---|---|
| Produktmenge [$Nm^3$/h] | 26 |
| $O_2$-Ausbeute [%] | 58 |
| Errechneter gesamter Energiebedarf [$KWh/Nm^3O_2$] | 0,350 |

**Beispiel 8 (erfindungsgemäß; Li-Zeolith X in der Eintrittszone und Ca-Zeolith A in der Austrittszone)**

Über die Trockenmittelzone wurden in den Adsorber 95 kg Probe D und darüber 95 kg der Probe B eingefüllt.

| | |
|---|---|
| Temperatur der Luft am Eintritt [°C] | 40 |
| Produktmenge [$Nm^3$/h] | 25,5 |
| $O_2$-Ausbeute [%] | 57,5 |
| Errechneter gesamter Energiebedarf [$KWh/Nm^3O_2$] | 0,355 |

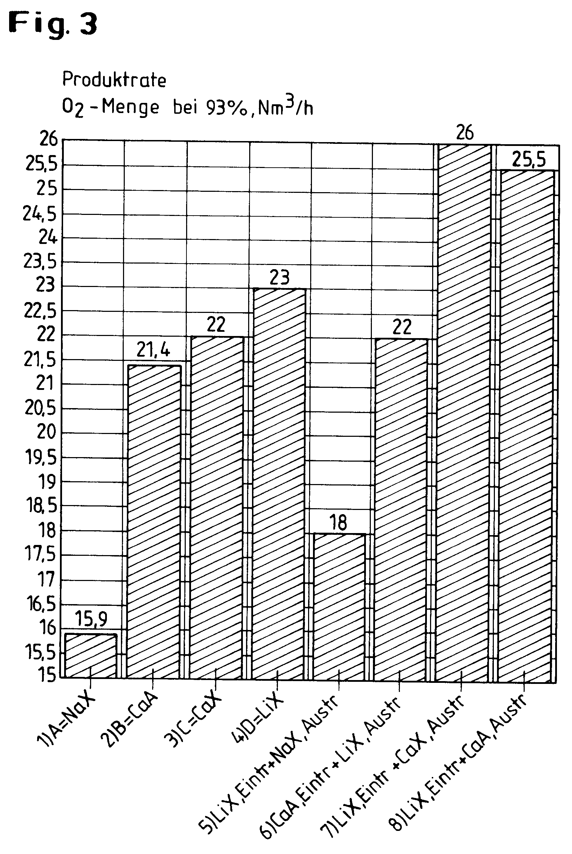

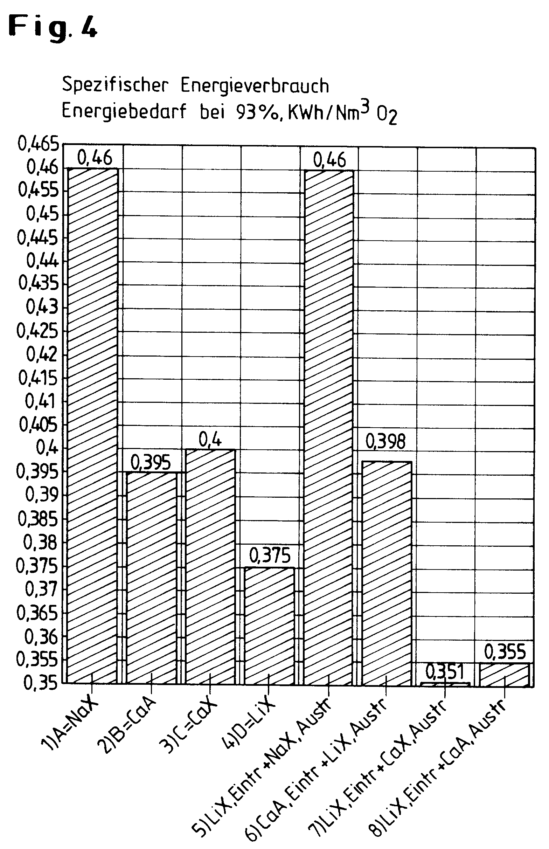

Die Adsorberschüttung gemäß Beispiel 7 zeigt eine bessere $O_2$-Ausbeute und einen geringeren Energiebedarf als die Schüttung aus Li-Zeolith X (Beispiel 4; siehe Fig. 3 und Fig. 4). Die $O_2$-Herstellkosten sind also geringer als in Beispiel 4. Die Menge des Ca-Zeolithen X und des Ca-Gehaltes im Ca-Zeolithen X korreliert zur Eintrittstemperatur. Bei höheren Temperaturen der eintretenden Luft ist der Ca-Gehalt zu erhöhen und bei tieferen Temperaturen zu erniedrigen.

Die besten Ergebnisse liefert die Schüttung gemäß Beispiel 8. Der Energiewert und auch die $O_2$-Produktionsrate sind gegenüber den Schüttungen gemäß Beispiel 2 oder 4 am besten.

Das Beispiel 5 liefert sehr schlechte Energiewerte für den erzeugten Sauerstoff.

**Patentansprüche**

1. Verfahren zur Absorption von Stickstoff aus Gasmischungen mit weniger polaren Gaskomponenten bei Temperaturen zwischen 20 und 50°C mittels Druckwechseladsorption, bei dem das Gasgemisch durch Absorber geleitet wird, die mit Schüttungen aus Zeolithgranulat gefüllt sind, dadurch gekennzeichnet, daß im Adsorber mindestens zwei Schüttungen vorliegen, wobei in der Eintrittszone des Adsorbers eine Schüttung aus Li-Zeolith X und in der Austrittszone des Adsorbers eine Schüttung aus Zeolith A, der mit Kationen der Erdalkalimetallgruppe bestehend aus Magnesium, Calcium und Strontium ausgetauscht ist, und/oder aus Zeolith X, der mit Kationen der Erdalkalimetallgruppe bestehend aus Magnesium, Calcium und Strontium ausgetauscht ist, vorliegen.

2. Verfahren gemäß Anspruch 1, dadurch gekennzeichnet, daß der Zeolith X ein molares $SiO_2/Al_2O_3$-Verhältnis von 2,0 bis 3,0 und ein molares Erdalkalimetalloxid/$Al_2O_3$-Verhältnis von 0,45 bis 1,0 aufweist.

3. Verfahren gemäß Anspruch 1, dadurch gekennzeichnet, daß der Li-Zeolith X ein molares $SiO_2/Al_2O_3$-Verhältnis von 2,0 bis 2,5 aufweist und daß 80 bis 100 % der $AlO_2$-Tetraedereinheiten im Zeolith mit Lithiumkationen assoziiert sind.

4. Verfahren gemäß einem oder mehreren der Ansprüche 1 bis 3, dadurch gekennzeichnet, daß im Adsorber mindestens zwei Schüttungen vorliegen, wobei in der Eintrittszone des Adsorbers eine Schüttung aus Li-Zeolith X und in der Austrittszone eine Schüttung aus Ca-Zeolith A und/oder Ca-Zeolith X vorliegen.

5. Verfahren gemäß Anspruch 4, dadurch gekennzeichnet, daß in der Eintrittszone des Adsorbers eine Schüttung aus Li-Zeolith X und in der Austrittszone des Adsorbers eine Schüttung aus Ca-Zeolith A oder Ca-Zeolith X vorliegen.

6. Verfahren gemäß Anspruch 4, dadurch gekennzeichnet, daß der Ca-Zeolith X ein molares $SiO_2/Al_2O_3$-Verhältnis von 2,0 bis 3,0 und ein molares $CaO/Al_2O_3$-Verhältnis von 0,45 bis 1,0 aufweist.

7. Verfahren gemäß Anspruch 4, dadurch gekennzeichnet, daß der Ca-Zeolith A ein molares $CaO/Al_2O_3$-Verhältnis von 0,45 bis 1,0 aufweist.

8. Verfahren gemäß einem oder mehreren der Ansprüche 1 bis 3, dadurch gekennzeichnet, daß im Adsorber mindestens zwei Schüttungen vorliegen, wobei in der Eintrittszone des Adsorbers eine Schüttung aus Li-Zeolith X und in der Austrittszone des Adsorbers eine Schüttung aus Sr-Zeolith A und/oder Sr-Zeolith X vorliegt.

9. Verfahren gemäß Anspruch 8, dadurch gekenzeichnet, daß der Sr-Zeolith X ein molares $SiO_2/Al_2O_3$-Verhältnis von 2,0 bis 3,0 und ein molares $SrO/Al_2O_3$-Verhältnis von 0,45 bis 1,0 aufweist.

**10.** Verfahren gemäß Anspruch 8, dadurch gekennzeichnet, daß der Sr-Zeolith A ein molares $SrO/Al_2O_3$-Verhältnis von 0,45 bis 1,0 aufweist.

**11.** Verfahren gemäß einem oder mehreren der Ansprüche 1 bis 3, dadurch gekennzeichnet, daß im Adsorber mindestens zwei Schüttungen vorliegen, wobei in der Eintrittszone des Adsorbers eine Schüttung aus Li-Zeolith X und in der Austrittszone des Adsorbers eine Schüttung aus Mg-Zeolith A und/oder Mg-Zeolith X vorliegt.

**12.** Verfahren gemäß Anspruch 11, dadurch gekennzeichnet, daß der Mg-Zeolith X ein molares $SiO_2/Al_2O_3$-Verhältnis von 2,0 bis 3,0 und ein molares $MgO/Al_2O_3$-Verhältnis von 0,30 bis 1,0 aufweist.

**13.** Verfahren gemäß Anspruch 11, dadurch gekennzeichnet, daß der Mg-Zeolith A ein molares $MgO/Al_2O_3$-Verhältnis von 0,30 bis 1,0 aufweist.

**14.** Verfahren gemäß einem oder mehreren der Ansprüche 1 bis 3, dadurch gekennzeichnet, daß im Adsorber mindestens zwei Schüttungen vorliegen, wobei in der Eintrittszone des Adsorbers eine Schüttung aus Li-Zeolith X und in der Austrittszone des Adsorbers eine Schüttung aus einem Zeolith A, der mit Calcium- und Magnesiumionen ausgetauscht ist und der ein molares $CaO/Al_2O_3$-Verhältnis von 0,05 bis 0,95 und molares $MgO/Al_2O_3$-Verhältnis von 0,05 bis 0,95 aufweist, und/oder aus einem Zeolith X, der mit Calcium- und Magnesiumionen ausgetauscht ist und der ein molares $CaO/Al_2O_3$-Verhältnis von 0,05 bis 0,95 und ein molares $MgO/Al_2O_3$Verhältnis von 0,05 bis 0,95 aufweist, vorliegen.

**15.** Verfahren gemäß einem oder mehreren der Ansprüche 1 bis 3, dadurch gekennzeichnet, daß im Adsorber mindestens zwei Schüttungen vorliegen, wobei in der Eintrittszone des Adsorbers eine Schüttung aus Li-Zeolith X und in der Austrittszone des Adsorbers eine Schüttung aus einem Zeolith A, der mit Calcium- und Strontiumionen ausgetauscht ist und der ein molares $CaO/Al_2O_3$-Verhältnis von 0,05 bis 0,95 und ein molares $SrO/Al_2O_3$-Verhältnis von 0,05 bis 0,95 aufweist, und/oder aus einem Zeolith X, der mit Calcium- und Strontiumionen ausgetauscht ist und der ein molares $CaO/Al_2O_3$-Verhältnis von 0,05 bis 0,95 und ein molares $SrO/Al_2O_3$-Verhältnis von 0,05 bis 0,95 aufweist, vorliegen.

**16.** Verfahren gemäß einem oder mehreren der Ansprüche 1 bis 3, dadurch gekennzeichnet, daß im Adsorber mindestens zwei Schüttungen vorliegen, wobei in der Eintrittszone des Adsorbers eine Schüttung aus Li-Zeolith X und in der Austrittszone des Adsorbers eine Schüttung aus einem Zeolith A, der mit Strontium- und Magnesiumionen ausgetauscht ist und der ein molares $SrO/Al_2O_3$-Verhältnis von 0,05 bis 0,95 und ein molares $MgO/Al_2O_3$-Verhältnis von 0,05 bis 0,95 aufweist, und/oder aus einem Zeolith X, der mit Calcium- und Strontiumionen ausgetauscht ist und der ein molares $SrO/Al_2O_3$-Verhältnis von 0,05 bis 0,95 und ein molares $MgO/Al_2O_3$-Verhältnis von 0,05 bis 0,95 aufweist, vorliegen.

# Fig. 1

N2-Adsorptionsisothermen
Temperatur  25 °C
Beladung [Nl N2/kg Zeolith]

Druck [mbar]

—△— Probe  A, Na-Zeolith X        —□— Probe  B, Ca-Zeolith A

—▲— Probe  C, Ca-Zeolith X        —■— Probe  D, Li-Zeolith X

Fig. 2

# Fig. 3

Produktrate
$O_2$-Menge bei 93%, Nm$^3$/h

# Fig. 4

Spezifischer Energieverbrauch
Energiebedarf bei 93%, KWh/Nm$^3$ O$_2$